# EUROPEAN PATENT SPECIFICATION

(11) **EP 4 059 400 B1**
(45) Date of publication and mention of the grant of the patent: **03.07.2024**
(21) Application number: 22161699.8
(22) Date of filing: 11.03.2022
(51) Int. Cl.: A47L 7/00

(54) **POWERED SANDER WITH DUST COLLECTION FEATURE**
MOTORSCHLEIFER MIT STAUBABSAUGUNGSMERKMAL
PONCEUSE ÉLECTRIQUE AVEC COLLECTEUR DE POUSSIÈRE

(30) Priority: 16.03.2021 US 202163161521 P
(43) Date of publication of application: 21.09.2022
(73) Proprietor: Black & Decker, Inc., New Britain, CT 06053 (US)
(72) Inventor: ZHOU, Min, Suzhou 215021 (CN); JIANG, Wei Xing, Suzhou 215021 (CN); LAN, Xiubao, Jiangsu 215021 (CN)
(74) Representative: SBD IPAdmin

(56) References cited:
- EP-A1- 2 946 878
- EP-A1- 3 315 264
- DE-A1-102014 007 402

## Description

The present invention relates to power tools, in particular powered sanders.

There are various existing powered sanders. It is desired to provide a powered sander with an efficient dust collection arrangement.

EP 2946878 discloses an electrically powered sander having a dust extraction port and a dust collection chamber attached to the dust extraction port.

DE 102014007402 A1 discloses an electrically powered grinder having a particle removal connection and a vacuum cleaner connected to the particle removal connection via a suction hose.

EP 3315264 A1 discloses a sander according to the preamble of Claim 1.

The present invention provides a sander according to Claim 1 of the appended claims.

Preferred, and other optional, features of the invention are defined and described in the dependent claims.

It is to be understood that any feature, including any preferred or otherwise optional feature, of any aspect and/or embodiment of the invention may be a feature, including a preferred or otherwise optional feature, of any other aspect and/or embodiment of the invention.

According to an aspect of an exemplary embodiment, there is a sander. The sander includes a housing; a motor housed in the housing; a platen which is driven by the motor; a dust chute; and a dust container. The dust chute contains a one-way valve which allows air to flow in a direction towards the dust container. The one-way valve comprises a flap held at a location away from edges of the flap.

The sander may further include bracket that holds the flap.

The flap may be secured to the bracket at a central location of the flap.

The bracket may have a holder.

The holder may secure the flap to the bracket.

The flap may include an opening.

The holder may extend through the opening.

The holder may have a forward end and a trailing end.

The trailing end may contact the flap.

The trailing end may be larger than the forward end.

The bracket may include a body portion and one or more legs, preferably a plurality of legs, extending from the body portion.

The body portion may include a backing that cooperates with the flap to create a seal.

The backing may cooperate with the edges of the flap to create the seal.

The body portion may include a projection.

The projection may engage with a seating portion in the dust chute to secure the bracket in the sander.

The bracket may include a plurality of legs.

The, or each, leg may extend from the holder to the body portion.

The flap may be made of a flexible material.

The bracket may be made of a substantially rigid material.

Embodiments of the invention will now be described, by way of example, with reference to the accompanying drawings, of which:
Fig. 1 is a perspective view of an exemplary embodiment of a sander;
Fig. 2 is another perspective view of the exemplary embodiment of the sander;
Fig. 3 is a perspective view of the housing of the exemplary embodiment of the sander;
Fig. 4 is a side view of the exemplary embodiment of the sander;
Fig. 5 is another perspective view of the exemplary embodiment of the sander with the battery pack removed;
Fig. 6 is a top view of the exemplary embodiment of the sander;
Fig. 7 is a perspective view of the first and second housing parts of the exemplary embodiment of the sander;
Fig. 8 is a perspective view of the exemplary embodiment of the sander with first and third housing parts removed illustrating internal parts of the sander;
Fig. 9 is a side view of the exemplary embodiment of the sander with first and third housing parts removed illustrating internal parts of the sander;
Fig. 10 is an exploded perspective view of the housing of the exemplary embodiment of the sander;
Fig. 11 is another exploded perspective view of the housing of the exemplary embodiment of the sander;
Fig. 12 is a perspective view of an exemplary embodiment of the battery pack;
Fig. 13 is a perspective view of the exemplary embodiment of the battery pack with part of the battery pack housing removed to illustrate the battery cells;
Fig. 14 is a side view of the exemplary embodiment of the battery pack with part of the battery pack housing removed to illustrate the battery cells;
Fig. 15 is a top view of the exemplary embodiment of the battery pack the battery pack housing removed;
Fig. 16 is a cross-sectional side view of an airflow of an exemplary embodiment of the sander;
Fig. 17 is another cross-sectional side view of an airflow of an exemplary embodiment of the sander;
Fig. 18 is an explanatory cross-sectional perspective side view of a dust blowback prevention feature of an exemplary embodiment of the sander;
Fig. 19 is an explanatory cross-sectional perspective side view of a dust blowback prevention feature of an exemplary embodiment of the sander;
Fig. 20 is another cross-sectional side view of an airflow of an exemplary embodiment of the sander;
Fig. 21 is another cross-sectional side view of an airflow of an exemplary embodiment of the sander;
Fig. 22 is a perspective exploded view of a one-way valve of an exemplary embodiment of the sander;
Fig. 23 is a perspective view of a one-way valve of an exemplary embodiment of the sander;
Fig. 24 is a perspective view of a bracket of an exemplary embodiment of the sander;
Fig. 25 is a perspective exploded view of a one-way valve and sander housing of an exemplary embodiment of the sander;
Fig. 26 is a close-up cross-sectional perspective side view of a portion of an exemplary embodiment of the sander; and
Fig. 27 is a close-up cross-sectional side view of a portion of an exemplary embodiment of the sander.

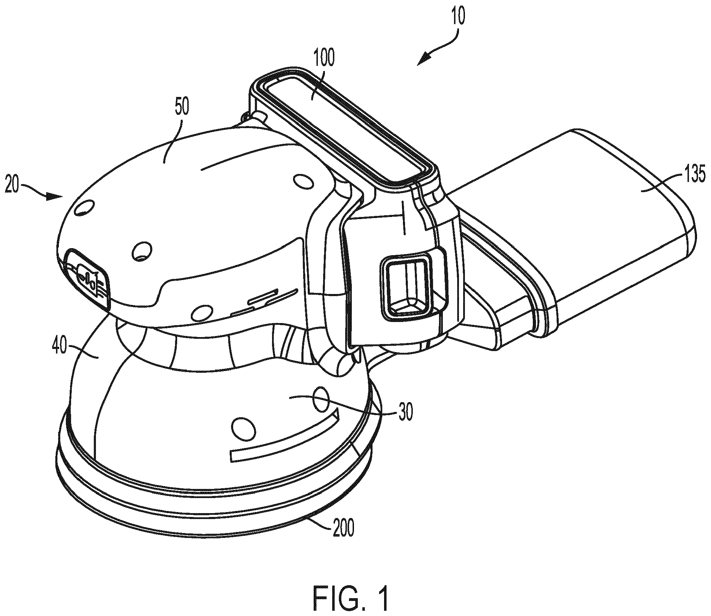

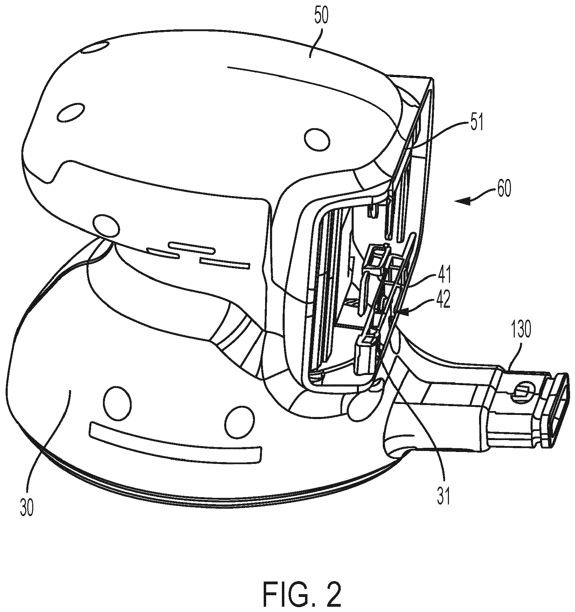

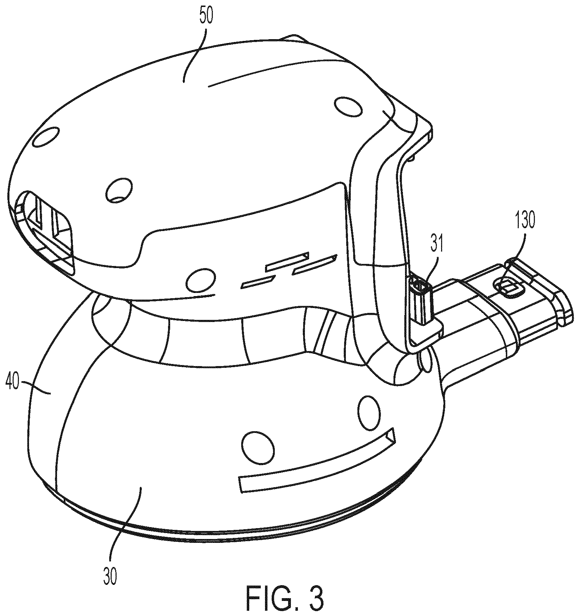

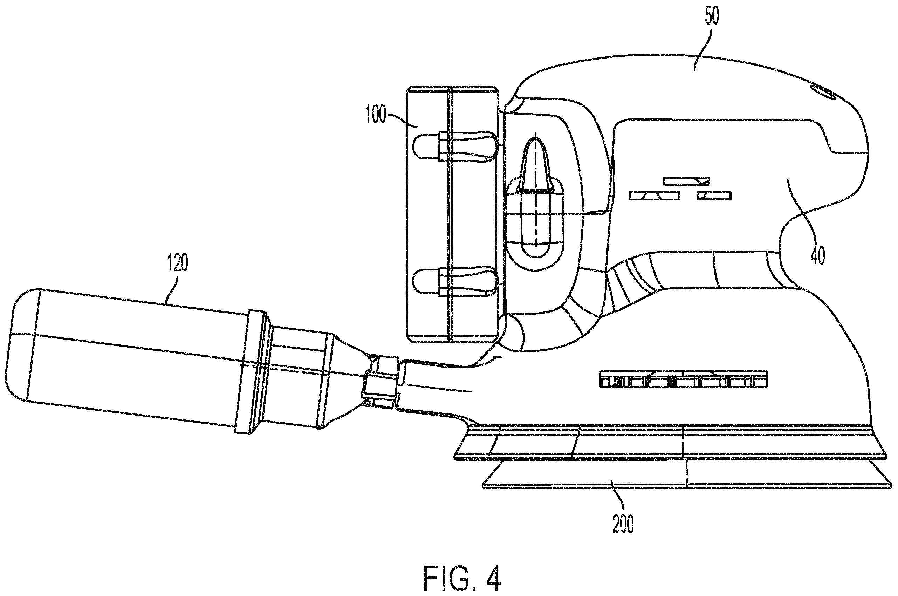

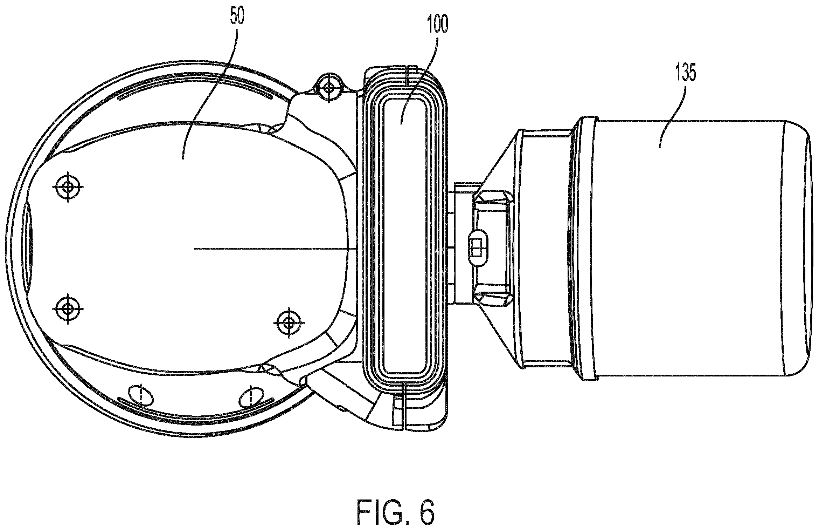

An exemplary embodiment of a sander according to the present application is shown in Figs. 1-15. The exemplary embodiment illustrates a power tool, in particular, a cordless random orbit sander (ROS) 10. The sander 10 of the exemplary embodiment is a random orbit sander. The sander 10 is powered by a removable and rechargeable battery pack 100. The sander 10 is turned on and off by a switch 11. As is well known, the sander 10 rotates a platen 200 in a random orbit to remove materials. The sander 10 of the present exemplary embodiment is a random orbit sander, but in other exemplary embodiments the sander could be a different type of sander, such as an orbit sander, a detail sander or a quarter-sheet sander. As shown, the sander 10 further includes a dust chute 130 which directs dust into a dust bag 135 for collection.

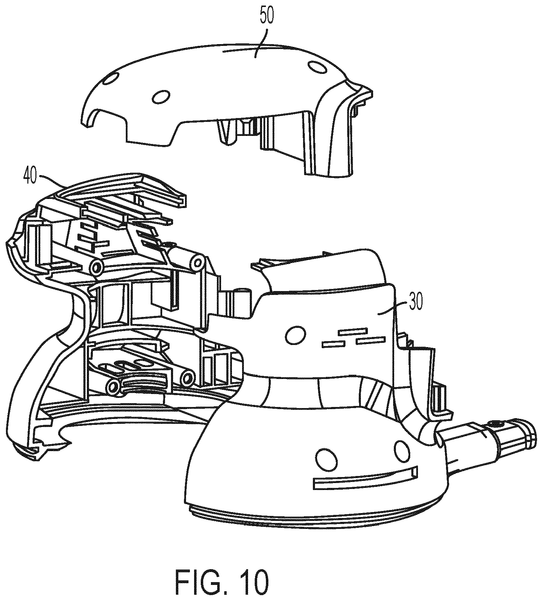

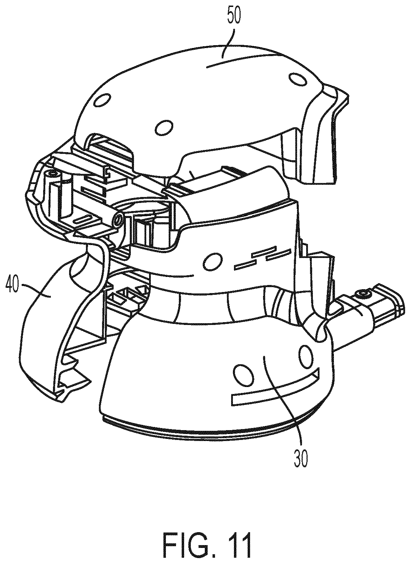

The housing 20 of the sander 10 is comprised of three housing parts including a first housing part/first side part 30, a second housing part/second side part 40 and a third housing part/top housing part 50. The three housing parts are each made of plastic and are assembled together by screws. The three housing parts 30, 40 and 50 can be seen throughout the drawings and are shown in exploded views in Figs. 10 and 11. The housing parts 30, 40, 50 come together to form a battery receptacle portion 60. As will be appreciated, the battery receptacle portion 60 receives a removable battery pack 100 which powers the sander 10.

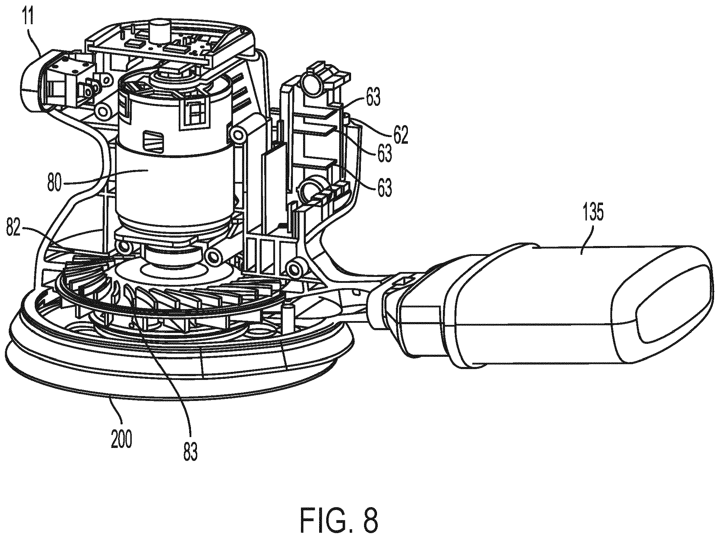

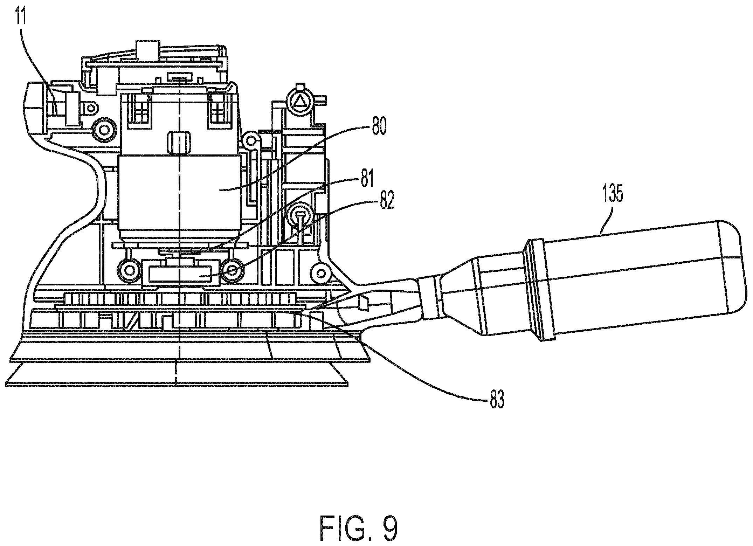

Internals of the sander are shown in Figs. 8 and 9, in which the first side part 30 and the top housing part 50 have been removed. As shown in Figs. 8 and 9, a motor 80 rotates an output shaft 81 which rotates a fan 83 and the sanding platen 200. A bearing 82 supports the output shaft 81. The platen 200 receives the output shaft 81 in an eccentric manner so that the platen 200 moves in an orbital motion when driven by the motor 80.

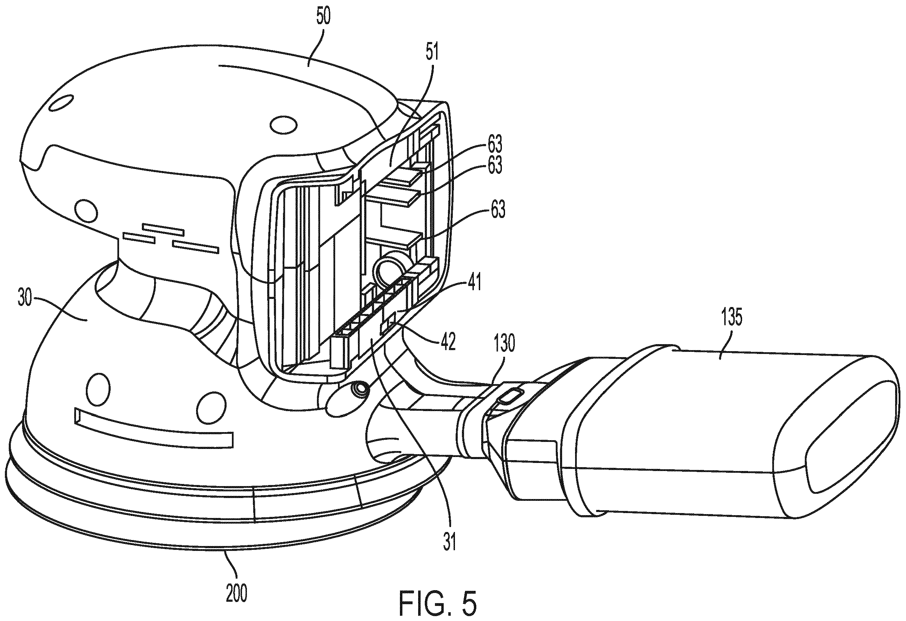

As shown in Fig. 5, the battery receptacle portion 60 includes a first rail 42 and a second rail 51. It also includes an electrical connection section 62 which includes a number of electrical connectors 63. The electrical connectors 63 engage electrical connectors from the battery pack 100 so that the pack 100 can provide power to the motor 80. The first rail 42 is made up of a rail section 31 from the first housing part 30 and a rail section 41 from the second housing part 40. The second rail 51 is formed from the top housing part 50. As seen, the rails 42 and 51 are generally perpendicular to a rotational axis of the motor 80. They also run horizontally when the sander 10 is placed on a flat horizontal surface. Additionally, the electrical connector section 62 is sandwiched between the second housing part 40 and the top housing part 50.

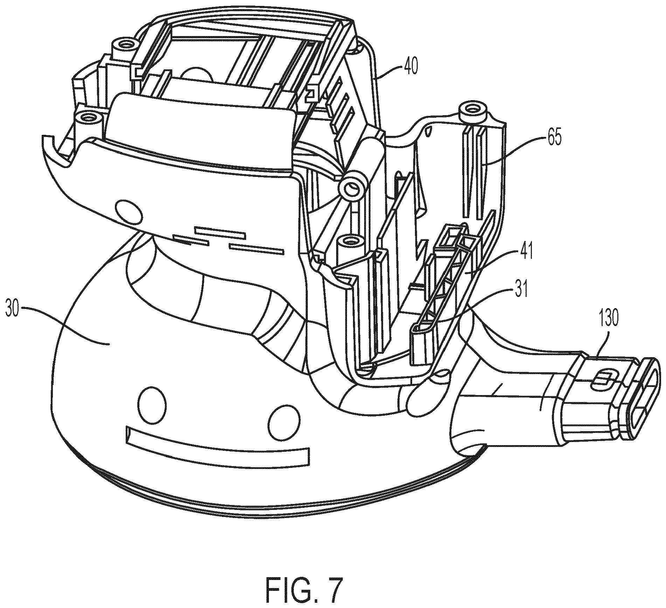

The three part construction of the sander housing 20 allows for an efficient design, assembly and for construction of the rails 42 and 51. As can be appreciated, in order to assemble the sander 10, various parts such as the motor 80 can be inserted into the second housing part 40. After that, the first housing part 30 and the second housing part 40 are connected to one another to secure the motor 80 therebetween. Bringing the first housing part 30 and the second housing part 40 together forms the first rail 42 out of the rail section 31 from the first housing part 30 and the rail section 41 from the second housing part 40. The electrical connector section 62 is inserted into the second housing part 40 at the slot 65 shown in Fig. 7. Fig. 7 shows the housing parts 30 and 40 without the electrical connector section 62, which allows the slot 65 to be seen. After the electrical connector section 62 is inserted into the slot 65, the top housing part 50 is then connected to the first and second housing parts 30, 40 to provide the second rail 51 and to secure the electrical connector 62.

Some of the above steps may be done in various orders or configurations. For example, one or more of the motor 80, bearing 82, fan 83 and other parts may be inserted into the first housing part 30 instead of the second housing part 40 so long as they can be clamped between the two housing parts 30, 40. Additionally, the electrical connector section 62 may be inserted before or after the first housing part 30 and the second housing part 40 are connected.

The three-part housing construction of the exemplary embodiment may have several advantages. For example, clamping operations in more than one direction can be performed. That is, the motor 80 can be held between the first and second housing sections 30, 40. Due to its location and the construction of the housing 20, the electrical connection section 62 cannot is not clamped between the first and second housing sections 30, 40. However, the electrical connection section 62 can be held between the second housing section 40 and the top housing section 50. Particularly, the electrical connection section 62 can be inserted into the second housing part 40 from a vertical direction. The top housing section 50 can then be assembled onto the first and second housing parts 30, 40 from the vertical direction to hold the electrical connection section 62 in place.

As will be appreciated, the exemplary embodiment of the present application allows for multiple clamping or holding operations between housing parts to take place. For example, the motor 80 can be held between the first and second housing parts 30, 40 in a first operation in a first direction and the electrical connection section 62 can be held between the top housing part 50 and the second housing part.

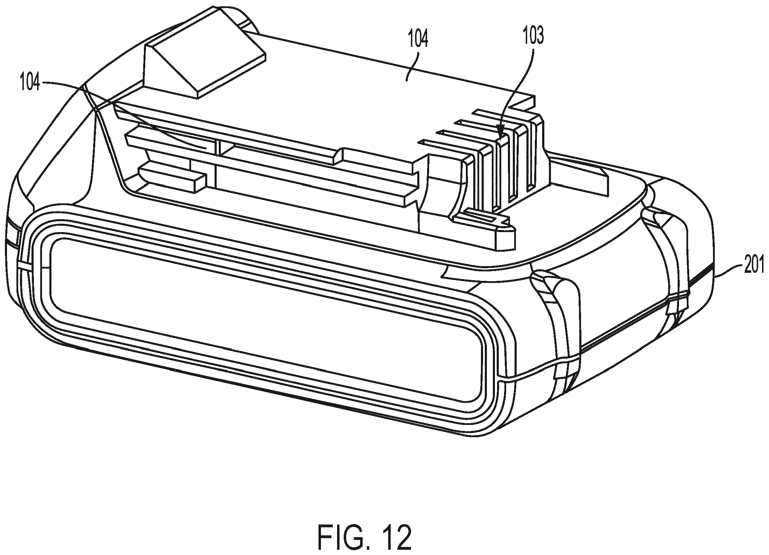

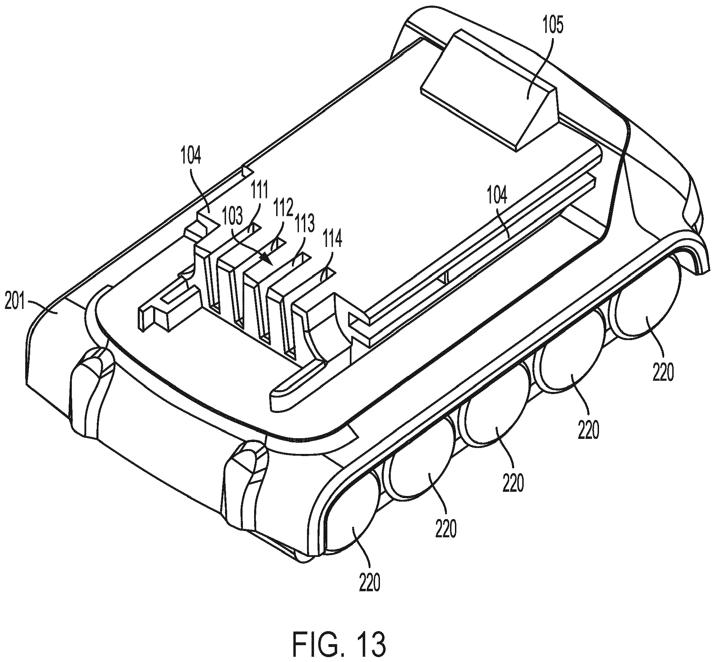

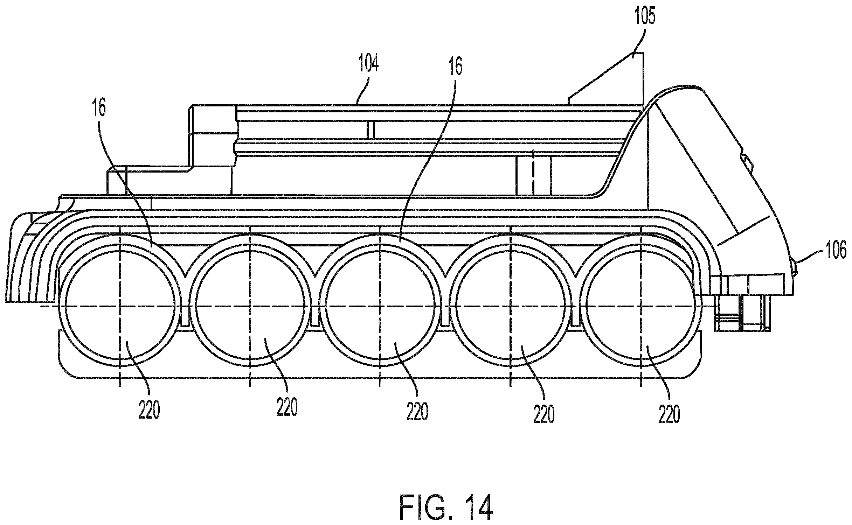

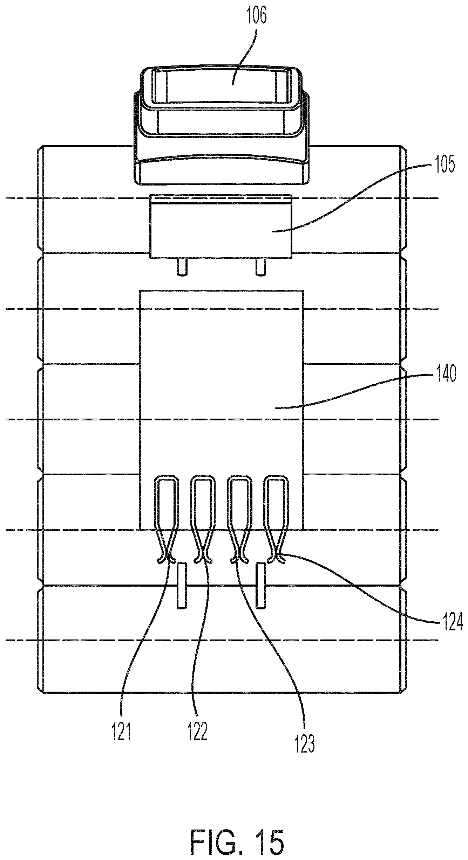

The battery pack 100 for powering the sander 10 is shown in further detail in Figs. 12-15. Fig. 12 is a perspective view of the pack 100. Fig. 13 is a perspective view of the pack 100 with a lower part of the pack housing 201 removed. Fig. 14 is a side view of the pack 100 with a lower part of the pack housing 201 removed. Fig. 15 is a top view of the pack 100 with the pack housing 201 removed.

The power tool battery pack 100 includes a set of rechargeable battery cells 220 disposed in a housing 201. The housing 201 includes guide rails 104 for engaging the rails 42 and 51 of the sander housing 20. The rails 104 slide between the rails 42, 51 and the rest of the sander housing 20 and the rails 42, 51 guide the battery pack 100 into place and prevent it from moving away from the motor 80 area of the housing 20. The battery pack 100 includes a latch 105 for securing the battery pack 100 in place. The latch 105 is biased upwardly by a spring (not shown) and the latch 105 can be moved by depression of the latch actuator 106, which may be integral with the latch 105. A battery pack with guide rails such as those shown these figures is more fully shown and described in US Patent No. 6,729,413. The battery pack 100 also includes a connection section 103 through which the battery pack 100 can make connection with the sander 10. The connection section includes four openings 111, 112, 113 and 114.

Figs. 13-15 each have at least part of the battery pack housing 201 removed. As shown, the pack 100 includes a plurality of rechargeable battery cells 220. A cradle 16 (Fig. 14) sits over the battery cells 220 and a printed circuit board (PCB) 140 (Fig. 15) is connected to the cradle 16. The PCB 140 is in electrical connection with the battery cells 220. Electric connectors 121, 122, 123 and 124 are mounted on the PCB 140 and connect with power tools through the connection section 103, specifically openings 111, 112, 113 and 114 shown in Fig. 12. The electrical connectors serve as terminals for the battery pack 100. Connector 121 may serve as a negative terminal; connector 122 may be a temperature terminal which relays information related to a temperature of the battery pack; connector 123 may be an ID terminal which relays information related to identifying the pack and connector 124 may be a positive terminal.

The battery pack 100 electrically connects with the sander 10 at the battery pack electrical connector section 62. The electrical connector section 62 includes three electrical connectors 63. The electrical connectors 63 connect with the positive, negative and temperature terminals 121, 124 and 122 of the battery pack 10. The ID terminal 123 of the battery pack 100 is used when charging the battery pack 100. The battery pack 100 may be charged by a separate battery pack charger (not shown).

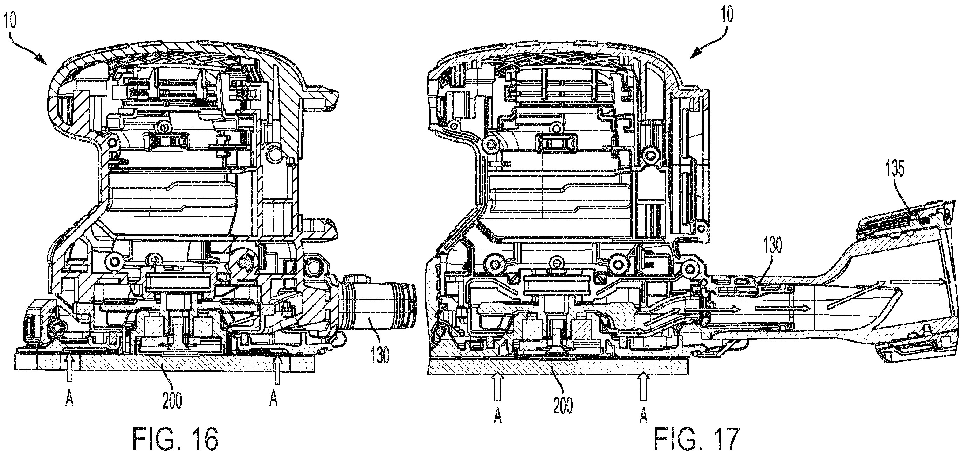

Fig. 16-27 illustrate a dust blowback reduction feature of the sander 10.

Figs. 16 and 17 illustrate a flow of air for the sander 10. The general direction of airflow is shown by arrows A. As will be appreciated the airflow show by the arrows A are explanatory as a general direction for the airflow. As shown in Figs. 16 and 17, fan 83 draws air in through the platen 200. The air is then directed through the dust chute 130. The dust chute 130 directs dust from the sander 10 into a dust container, in this case dust bag 135. In other embodiments, a rigid dust container may be used instead of a dust bag. Air is blown in the direction A shown in Fig. 16 through the dust chute 130 into the dust bag 135. The dust and other debris is captured and collected in the bag 135 while the air flows through the material of the bag to the ambient atmosphere. The dust bag 135 may then be emptied by a user to dispose of the collected dust and debris.

The dust chute 130 includes a recess 140 near an exit end of the dust chute 130. The recess 140 allows for connection with the dust bag 135. The dust bag 135 may have a projection which engages with the recess 140. Other methods of connection between a dust container and the dust chute 130 are also possible. For example, they may be engaged with a bayonet connection.

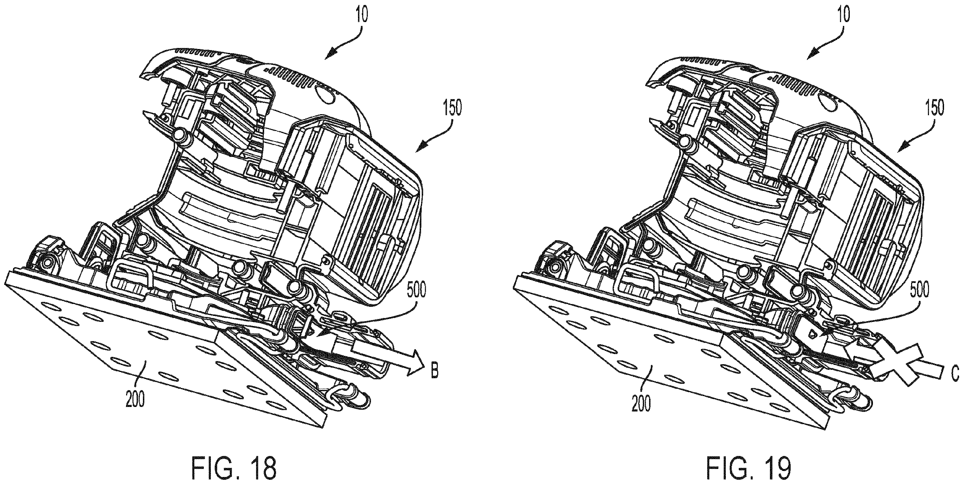

As shown in various figures, including Figs. 18-24, the sander 10 includes a one-way valve 500. The one-way valve 500 includes a support bracket 400 and a valve member 450. The valve member 450 is a flexible valve in the form of a flap. The one-way valve 500 is disposed in the dust chute 130. As shown in Fig. 18, the one-way valve 500 allows for the air and dust to flow in the direction B towards the dust bag 135. As shown in Fig. 19, the one-way valve 500 prevents air, dust and debris from flowing the opposite direction C back into the sander 10.

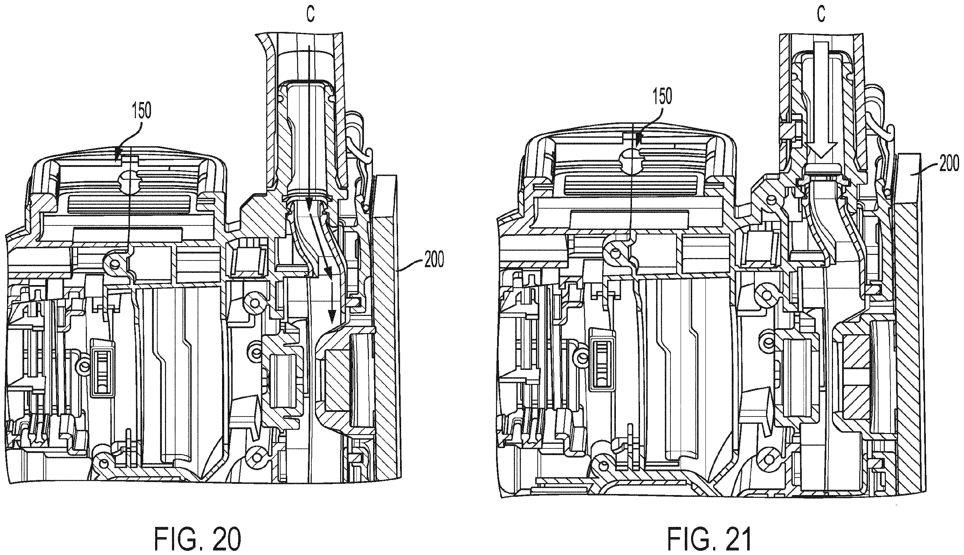

The one-way valve 500 is particularly useful when the sander 10 is placed in a vertical direction with the dust bag 135 above the sander housing 20, as is shown in Figs. 20 and 21. In the orientation shown in Figs. 20 and 21, gravity provides a force in the direction away from the dust bag 135 (i.e., in the direction C ). This could lead to dust heading back into the main body of the sander 10 and getting sprayed out of the sander 10 rather than being collected in the dust bag 135. The one-way valve 500 can limit or prevent such dispersion by stopping air, dust and debris flow at the flexible valve 450. Although Figs. 20 and 21 illustrate the sander 10 in a purely vertical orientation, it will be appreciated that a similar effect may happen and benefit achieved at other orientations.

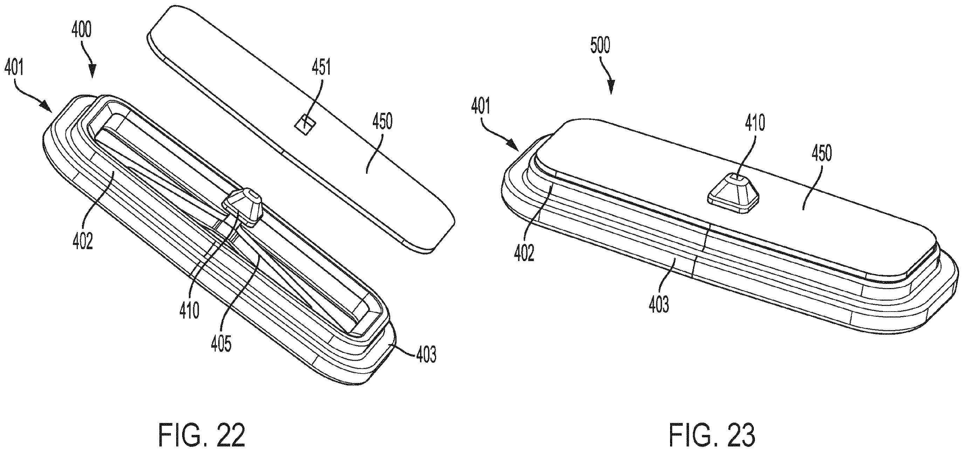

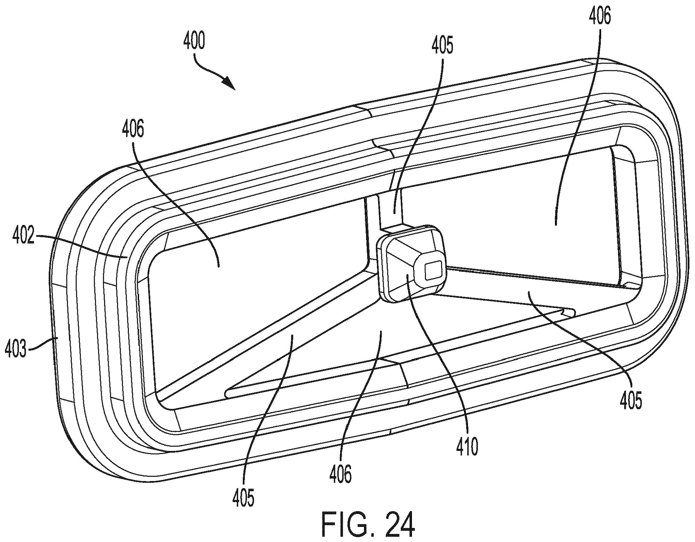

The bracket 400 and valve 450 are shown in detail in Figs. 22-24. Fig. 22 is an exploded assembly of the bracket 400 and valve 450. Figs. 23 illustrates the valve 450 assembled with the bracket 400. Fig. 24 illustrates the bracket 400 by itself.

The valve 450 may be made of silicone, rubber or another flexible material. This allows the valve 450 to flex and move. In particular, the valve member 450 may flex away from the bracket 400 in the direction of airflow A, as best shown in Fig. 18. This allows air, dust and debris to flow past the bracket 400 and valve 450 towards the end of the chute 130 and into the dust bag 135. Conversely, the bracket support 400 limits movement of the valve member 450 in the direction towards the bracket 400. When being pushed by air back towards the sander unit, the valve member 450 abuts the bracket 400 and forms a seal and prevents air, dust and debris from flowing back into the main body of the sander 10. This is best seen in Figs. 19 and 21. The bracket is made of a rigid material such as an ABS plastic.

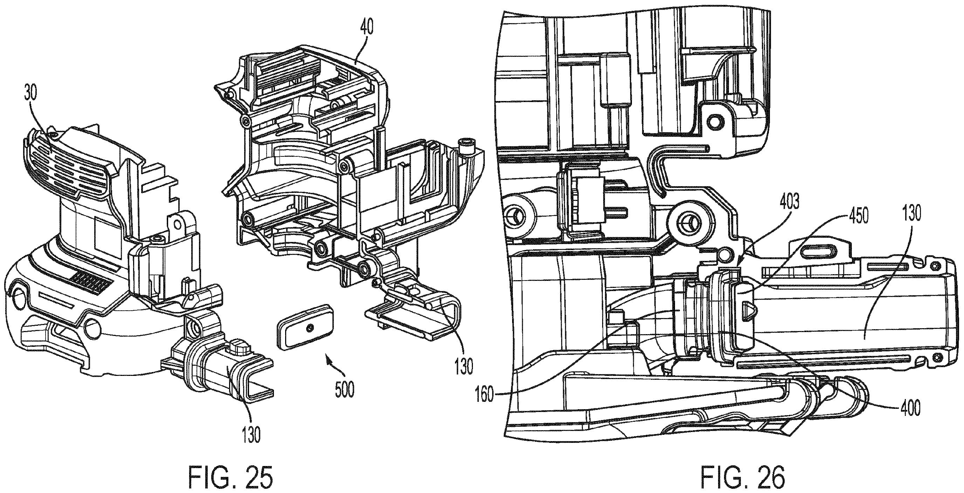

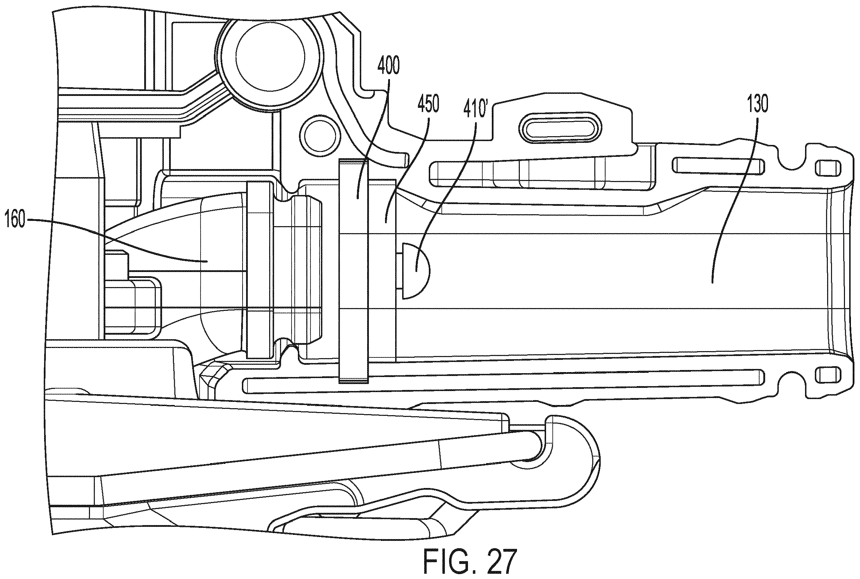

As shown in Figs. 22 and 24, the bracket 400 includes a body portion 401 and a plurality of legs 405 extending inwardly from the body portion 401. The body portion 401 includes a backing 402 that engages an outer portion of the valve 450 to create a seal. The body portion 401 also includes a projection 403 that engages with the sander 10 so as to position and secure the bracket 400 in the dust chute 130 of the sander (see, e.g., Figs. 26 and 27). The bracket 400 may also include an asymmetric rib at the projection 403 in order to aid in the assembly.

The legs 405 provide a stable support for the valve member 450. Between the legs 405 are three openings 406 through which the previously discussed air, dust and debris flows past the bracket 400. This provides multiple paths for the air flow and associated dust and debris. Also, at the center of the bracket 400 there is a holder 410. The holder 410 engages the valve 450 and holds the valve 450 in place. In the exemplary embodiment, the valve 450 includes a rectangular shaped opening 451. The holder 410 is larger than the opening 451 in at least one dimension. Because the valve 450 is flexible, the holder 410 can be pressed through the opening 451, thereby connecting the valve 450 and bracket 400 and securing them together. In the exemplary embodiment, the holder has a pyramidal shape. This pyramidal shape provides a relatively smaller point to allow the holder 410 to press through the hole 451, while the bottom of the holder is the base of the pyramidal shape and provides a relatively large contact area for securing the valve 450. The rectangular shape of the opening 451 helps to prevent the valve 450 from rotating. In Fig. 27, the holder 410' has a domed shape rather than a pyramidal shape, but is otherwise the same as holder 410. Like a pyramidal shape, the dome shape of the holder 410' includes a leading end with a smaller front point and a trailing end with a relatively large surface area. A dome shape may also be effective at providing a good leading surface for pressing the holder through the opening 451 in the valve member 450 and providing a good trailing end for contacting and securing the valve member 450 in place.

In the exemplary embodiment, there are three legs 405. In other embodiments, there may be more or fewer legs. For example, there may be 1 leg, 2 legs or 4 or more legs. As there are more or less legs, there may also be more or less openings.

Figs. 25-27 illustrate assembly and location of the valve member 450 and bracket 400. As shown in Figs. 25-27, the bracket 400 and attached valve member 450 are captured between the first housing part 30 and he second housing part 40. In particular, the projection 403 of the bracket 400 fits in a groove in the sander 10, particular a groove in the chute 130 of the sander 10. In assembly, the projection 403 of the bracket 400 is placed in the groove in one of the housing parts. In the exemplary embodiment, the projection 403 is placed initially in the first housing part 30 and then the second housing part 40 is assembled with the first housing part 30 to capture the bracket 400 therebetween. The order may be reversed with the bracket 400 being initially placed in the second housing part 40.

As shown in Figs. 25-27, the bracket 400 is located near an inlet end of he dust chute 130 adjacent to the exit of shroud 160. Shroud 160 surrounds the fan 83 to capture the air and direct it towards the dust chute 130. As shown in Fig. 27, the bracket 400 is disposed in the chute 130 near an exit of the shroud 160 and there is a small distance between the shroud 160 and the bracket 400. In other embodiments, the bracket 400 may directly abut the shroud 160 or be spaced farther from the shroud, such as towards a center of the chute 130.

As shown in Fig. 26, the bracket 400 may optionally have an asymmetric rib 404 that corresponds with a similar groove in the sander 10. The asymmetric rib 404 blocks the bracket 400 from being inserted into the sander upside-down or backwards.

Although the description provided above provides detail for the purpose of illustration based on what is currently considered to be the most practical and preferred embodiments, it is to be understood that such detail is solely for that purpose and that the disclosure is not limited to the expressly disclosed embodiments, but, on the contrary, is intended to cover modifications and equivalent arrangements that are within the scope of the appended claims.

## Claims

1. A sander (10) comprising:
a housing (20);
a motor (80) housed in the housing (20);
a platen (200) configured to be driven by the motor (80);
a dust chute (130); and
a dust container (135);
**characterized in that** the dust chute (130) contains a one-way valve (500) which allows air to flow in a direction towards the dust container (135); and
wherein the one-way valve (500) comprises a flap (450) held at a location away from edges of the flap (450).

2. The sander (10) according to claim 1, further comprising a bracket (400) that holds the flap (450).

3. The sander (10) according to claim 2, wherein the flap (450) is secured to the bracket (400) at a generally central location of the flap (450), preferably a substantially central location of the flap (450).

4. The sander (10) according to claim 3, wherein the flap (450) is secured to the bracket (400) only at a generally central location of the flap (450), preferably only at a substantially central location of the flap (450).

5. The sander (10) according to any one of claims 2 to 4, wherein the bracket (400) has a holder (410), and the holder (410) secures the flap (450) to the bracket (400).

6. The sander (10) according to claim 5, wherein the flap (450) includes an opening (451), and the holder (410) extends through the opening (451) to secure the flap (450) to the bracket (400).

7. The sander (10) according to claim 6, wherein the holder (410) has a forward end and a trailing end, the trailing end contacts the flap (450), and the trailing end is larger than the forward end thereby to secure the flap (450) to the bracket.

8. The sander (10) according to any one of claims 5 to 7, wherein the bracket (400) comprises a body portion (401), preferably comprising a peripheral frame portion thereof, and one or more legs (405), preferably a plurality of legs (405), extending from the body portion (401) to the holder (410), and the holder (410) is supported by the leg(s).

9. The sander (10) according to claim 8, wherein the body portion (401) comprises a backing (402) that cooperates with the flap (450) to create a seal.

10. The sander (10) according to claim 9, wherein the backing (402) cooperates with the edges of the flap (450) to create the seal.

11. The sander (10) according to any one of claims 8 to 10, wherein the body portion (401) further comprises a peripheral projection (403), and the projection (403) engages with a seating portion in the dust chute (130) to secure the bracket in the sander (10).

12. The sander (10) according to any preceding claim, wherein the flap (450) is made of a flexible material.

13. The sander (10) according to claim 2 or any claim dependent thereon, wherein the bracket (400) is made of a substantially rigid material.

14. The sander (10) according to any preceding claim, further comprising a power supply arranged to power the motor (80).

15. The sander (10) according to claim 14, wherein the power supply comprises a battery, preferably a removable battery pack (100) attached or attachable to the housing (20).

## Patentansprüche

1. Schleifer (10), umfassend:
ein Gehäuse (20);
einen Motor (80), der in dem Gehäuse (20) untergebracht ist;
eine Platte (200), die konfiguriert ist, um vom Motor (80) angetrieben zu werden;
einen Staubschacht (130); und
einen Staubbehälter (135);
**dadurch gekennzeichnet, dass** der Staubschacht (130) ein Einwegventil (500) enthält, das es Luft ermöglicht, in eine Richtung zum Staubbehälter (135) hin zu strömen; und
wobei das Einwegventil (500) eine Klappe (450) umfasst, die an einer von Kanten der Klappe (450) entfernten Stelle gehalten wird.

2. Schleifer (10) nach Anspruch 1, der weiter eine Halterung (400) umfasst, welche die Klappe (450) hält.

3. Schleifer (10) nach Anspruch 2, wobei die Klappe (450) an einer im Allgemeinen zentralen Stelle der Klappe (400), vorzugsweise einer im Wesentlichen zentralen Stelle der Klappe (450), an der Halterung (450) gesichert ist.

4. Schleifer (10) nach Anspruch 3, wobei die Klappe (450) nur an einer im Allgemeinen zentralen Stelle der Klappe (450), vorzugsweise nur an einer im Wesentlichen zentralen Stelle der Klappe (450), an der Halterung (400) gesichert ist.

5. Schleifer (10) nach einem der Ansprüche 2 bis 4, wobei die Halterung (400) einen Halter (410) aufweist, und der Halter (410) die Klappe (450) an der Halterung (400) sichert.

6. Schleifer (10) nach Anspruch 5, wobei die Klappe (450) eine Öffnung (451) beinhaltet, und sich der Halter (410) durch die Öffnung (451) erstreckt, um die Klappe (450) an der Halterung (400) zu sichern.

7. Schleifer (10) nach Anspruch 6, wobei der Halter (410) einen vorderen Teil und einen hinteren Teil aufweist, der hintere Teil die Klappe (450) berührt, und der hintere Teil größer ist als der vordere Teil, um dadurch die Klappe (450) an der Halterung zu sichern.

8. Schleifer (10) nach einem der Ansprüche 5 bis 7, wobei die Halterung (400) einen Körperabschnitt (401) umfasst, der vorzugsweise einen peripheren Rahmenabschnitt davon umfasst, und ein oder mehrere Beine (405), vorzugsweise eine Vielzahl von Beinen (405), die sich vom Körperabschnitt (401) zum Halter (410) erstrecken, und der Halter (410) von dem/den Bein(en) getragen wird.

9. Schleifer (10) nach Anspruch 8, wobei der Körperabschnitt (401) eine Unterlage (402) umfasst, die mit der Klappe (450) zusammenwirkt, um eine Dichtung zu erzeugen.

10. Schleifer (10) nach Anspruch 9, wobei die Unterlage (402) mit den Kanten der Klappe (450) zusammenwirkt, um die Dichtung zu erzeugen.

11. Schleifer (10) nach einem der Ansprüche 8 bis 10, wobei der Körperabschnitt (401) weiter einen peripheren Vorsprung (403) umfasst, und der Vorsprung (403) mit einem Sitzabschnitt in dem Staubschacht (130) in Eingriff steht, um die Halterung in dem Schleifer (10) zu sichern.

12. Schleifer (10) nach einem vorstehenden Anspruch, wobei die Klappe (450) aus einem flexiblen Material gefertigt ist.

13. Schleifer (10) nach Anspruch 2 oder einem davon abhängigen Anspruch, wobei die Halterung (400) aus einem im Wesentlichen starren Material gefertigt ist.

14. Schleifer (10) nach einem vorstehenden Anspruch, der weiter eine Stromversorgung umfasst, die eingerichtet ist, um den Motor (80) mit Strom zu versorgen.

15. Schleifer (10) nach Anspruch 14, wobei die Stromversorgung eine Batterie, vorzugsweise eine entfernbare Batterie (100) umfasst, der am Gehäuse (20) befestigt, oder befestigbar ist.

## Revendications

1. Ponceuse (10) comprenant :
un boîtier (20) ;
un moteur (80) logé dans le boîtier (20) ;
un plateau (200) configuré pour être entraîné par le moteur (80) ;
une goulotte à poussière (130) ; et
un récipient à poussière (135) ;
**caractérisée en ce que** la goulotte à poussière (130) contient une valve unidirectionnelle (500) qui permet à l'air de s'écouler dans une direction vers le récipient à poussière (135) ; et
dans laquelle la valve unidirectionnelle (500) comprend un volet (450) maintenu à un emplacement éloigné des bords du volet (450).

2. Ponceuse (10) selon la revendication 1, comprenant en outre un support (400) qui maintient le volet (450).

3. Ponceuse (10) selon la revendication 2, dans laquelle le volet (450) est fixé au support (400) à un emplacement généralement central du volet (450), de préférence un emplacement sensiblement central du volet (450).

4. Ponceuse (10) selon la revendication 3, dans laquelle le volet (450) est fixé au support (400) uniquement à un emplacement généralement central du volet (450), de préférence uniquement à un emplacement sensiblement central du volet (450).

5. Ponceuse (10) selon l'une quelconque des revendications 2 à 4, dans laquelle le support (400) présente un dispositif de retenue (410), et le dispositif de retenue (410) fixe le volet (450) au support (400).

6. Ponceuse (10) selon la revendication 5, dans laquelle le volet (450) inclut une ouverture (451), et le dispositif de retenue (410) s'étend à travers l'ouverture (451) pour fixer le volet (450) au support (400).

7. Ponceuse (10) selon la revendication 6, dans laquelle le dispositif de retenue (410) présente une extrémité avant et une extrémité de fuite, l'extrémité de fuite entre en contact avec le volet (450), et l'extrémité de fuite est plus grande que l'extrémité avant permettant ainsi de fixer le volet (450) au support.

8. Ponceuse (10) selon l'une quelconque des revendications 5 à 7, dans laquelle le support (400) comprend une partie de corps (401), comprenant de préférence une partie de cadre périphérique de celle-ci, et un ou plusieurs pieds (405), de préférence une pluralité de pieds (405), s'étendant de la partie de corps (401) au dispositif de retenue (410), et le dispositif de retenue (410) est soutenu par le(s) pied(s).

9. Ponceuse (10) selon la revendication 8, dans laquelle la partie de corps (401) comprend un renfort (402) qui coopère avec le volet (450) pour créer un joint d'étanchéité.

10. Ponceuse (10) selon la revendication 9, dans laquelle le renfort (402) coopère avec les bords du volet (450) pour créer le joint d'étanchéité.

11. Ponceuse (10) selon l'une quelconque des revendications 8 à 10, dans laquelle la partie de corps (401) comprend en outre une saillie périphérique (403), et la saillie (403) entre en prise avec une partie d'appui dans la goulotte à poussière (130) pour fixer le support dans la ponceuse (10).

12. Ponceuse (10) selon une quelconque revendication précédente, dans laquelle le volet (450) est fabriqué à partir d'un matériau souple.

13. Ponceuse (10) selon la revendication 2 ou une quelconque revendication qui en dépend, dans laquelle le support (400) est fabriqué à partir d'un matériau sensiblement rigide.

14. Ponceuse (10) selon une quelconque revendication précédente, comprenant en outre une alimentation électrique agencée pour alimenter le moteur (80).

15. Ponceuse (10) selon la revendication 14, dans laquelle l'alimentation électrique comprend une batterie, de préférence un bloc-batterie amovible (100) fixé ou pouvant être fixé au boîtier (20).
